# EUROPÄISCHE PATENTSCHRIFT

(11) **EP 3 879 162 B1**
(45) Veröffentlichungstag und Bekanntmachung des Hinweises auf die Patenterteilung: **07.06.2023**
(21) Anmeldenummer: 20162686.8
(22) Anmeldetag: 12.03.2020
(51) Int. Cl.: F16L 55/11, B25H 7/00, B25H 7/04

(54) **VERSCHLUSSSTOPFEN**
SEALING STOPPER
BOUCHON D'OBTURATION

(43) Veröffentlichungstag der Anmeldung: 15.09.2021
(73) Patentinhaber: Geberit International AG, 8645 Jona (CH)
(72) Erfinder: RÖST, Andreas, 8645 Jona (CH)
(74) Vertreter: Frischknecht, Harry Ralph

(56) Entgegenhaltungen:
- IT-A1- UB20 155 084
- NL-C2- 2 001 685
- US-A- 5 622 208
- US-A1- 2016 008 965
- US-B1- 6 360 779

## Beschreibung

### TECHNISCHES GEBIET

Die vorliegende Erfindung betrifft einen Verschlussstopfen für ein Rohr nach dem Oberbegriff von Anspruch 1.

### STAND DER TECHNIK

Aus dem Stand der Technik ist es bekannt, Rohre mit Schutzdeckeln oder Verschlussstopfen zu versehen. Siehe zum Beispiel ITUB20155084 A1 und US5622208. Die Verschlussstopfen verschliessen das Rohr, so dass vor der Installation des Rohrs kein Schmutz in das Rohr gelangen kann. Gerade bei Rohren für die Trinkwasserversorgung ist es äusserst wichtig, dass die Verschlussstopfen während des Transports in den Rohren verbleiben, so dass ein Eindringen von Schmutz in der Logistikkette verhindert werden kann.

Weiter muss der Verschlussstopfen aber durch den Installateur möglichst einfach vom Rohr getrennt werden können, so dass die Rohrinstallation auf der Baustelle effizient ausgeführt werden kann. Typischerweise werden an den Rohrenden Fittings angebracht, mit welchen das Rohr mit weiteren Rohren oder mit Armaturen verbunden werden kann.

Ein weiteres optionales Erfordernis ist in gewissen Anwendungsfällen auch, dass ein Verschlussstopfen wieder einfach mit einem Rohr verbunden werden kann.

### DARSTELLUNG DER ERFINDUNG

Ausgehend von diesem Stand der Technik liegt der Erfindung eine Aufgabe zugrunde, einen Verschlussstopfen zum Verschliessen eines Rohrs anzugeben, welcher die Nachteile des Standes der Technik überwindet. Insbesondere ist es eine Aufgabe, einen Verschlussstopfen anzugeben, der einfacher aus dem Rohr entfernt werden kann.

Diese Aufgabe löst der Gegenstand nach Anspruch 1. Demgemäss umfasst ein Verschlussstopfen zum Verschliessen eines Rohrs einen sich um eine Mittelachse herumerstreckenden Stopfenabschnitt mit mindestens einem Rückhalteelement. Der Verschlussstopfen ragt mit dem Stopfenabschnitt im mit dem Rohr verbundenen Zustand in das Rohr ein und verschliesst die Rohröffnung. Mit dem mindestens einen Rückhalteelement ist eine kraftschlüssige Verbindung zwischen Verschlussstopfen und der Rohrinnenseite bereitstellbar.

Weiter umfasst der Verschlussstopfen einen Frontabschnitt mit einem Laschenelement, wobei das Laschenelement im mit dem Rohr verbundenen Zustand frei zugänglich ist, derart, dass das Laschenelement durch einen Installateur ergreifbar ist und dass der Verschlussstopfen mit dem Laschenelement aus dem Rohr herausziehbar ist.

Mit dem Laschenelement wird dem Installateur ein Element bereitgestellt, welches ein einfaches Herausziehen des Verschlussstopfens aus dem Rohr erlaubt. Der Installateur ergreift dabei das Laschenelement und zieht den Verschlussstopfen am Laschenelement aus dem Rohr. Durch das Laschenelement ist der Einsatz einer Zange oder einem ähnlichen Werkzeug nicht nötig.

Vorzugsweise ist das Laschenelement von einer Ausgangslage, in welcher das Laschenelement an einer Stirnfläche des Frontabschnitts anliegt, in eine Betätigungslage, in welcher das Laschenelement von der Stirnfläche wegragt, wegbiegbar.

Dadurch, dass das Laschenelement an der Stirnfläche anliegt, steht dieses in der Ausgangslage auch nicht vom Verschlussstopfen ab, was den Vorteil aufweist, dass beim Transport des Rohrs, das Laschenelement nicht an anderen Elementen ein- oder verhaken kann, wodurch es zu einem zufälligen Ausreissen des Verschlussstopfens kommen könnte.

Die Stirnfläche ist im Wesentlichen rechtwinklig zur Mittelachse des Verschlussstopfens orientiert.

Vorzugsweise ist das Laschenelement über mindestens eine mit einer Sollbruchstelle ausgebildeten Verbindung mit dem Frontabschnitt verbunden, wobei die mindestens eine Sollbruchstelle vor dem Herausziehen des Verschlussstopfens auftrennbar ist. Das heisst mit anderen Worten, dass die Sollbruchstelle der Verbindung bei der Bewegung von der Ausgangslage in die Betätigungslage durch den Installateur aufgebrochen wird.

Durch die Anordnung dieser Verbindung ergeht der Vorteil, dass die Lage des Laschenelements vor dem Vorgang des Herausziehens zum Verschlussstopfen gesichert ist. Hierdurch kann dem aus dem Rohr herausragenden Teil des Verschlussstopfens eine kompakte Struktur gegeben werden, was das Risiko eines Einhakens und das unbeabsichtige Herausziehen weiter minimiert.

Die Verbindung ist vorzugsweise als Verbindungssteg ausgebildet, wobei der Verbindungssteg je nach Ausbildung des Laschenelementes quer zur Mittelachse oder parallel zur Mittelachse verlaufen kann.

Das Laschenelement ist als Bogen ausgebildet, der sich um einen Bogenwinkel um die Mittelachse von einem ersten Bogenende zu einem zweiten Bogenende erstreckt. Die genannten Bogenenden sind dabei fest am Frontabschnitt angeformt. Der Bogen zwischen den Bogenenden ist vom Frontabschnitt wegbiegbar.

Die genannte mindestens Verbindung mit der Sollbruchstelle liegt am Bogen des Laschenelements zwischen den beiden Bogenenden. Die Verbindung verbindet den Bogen mit dem Frontabschnitt.

Vorzugsweise weist der Bogenwinkel des Bogens zwischen den beiden genannten Bogenenden einen Winkel im Bereich von 180° bis 360°, insbesondere einen Winkel im Bereich von 240° bis 330°, auf.

Der Aussendurchmesser des Bogens ist möglichst gross gewählt, wobei der Aussendurchmesser aber nicht grösser als der Aussendurchmesser des mindestens einen Rückhalteelements ist; oder wobei der Aussendurchmesser aber nicht grösser ist, als 1,1 Mal der Aussendurchmesser des mindestens einen Rückhalteelements. Der Bogen kann aber, insbesondere bei grossen Rohrdurchmessern, auch kleiner gewählt sein.

Weiter ist der Aussendurchmesser des Bogens möglichst gross gewählt, wobei dieser aber nicht oder nur in einem geringen Mass über einen geometrischen Hüllzylinders hervorsteht, der durch den Aussendurchmesser des Rohrs definiert ist. In einer anderen Variante kann der Bogen abschnittsweise oder als solches über den besagten Hüllzylinder herausragen. Es gibt hier bezüglich des Rohrs einen seitlichen Überstand. Dies hat den Vorteil, dass ein Fitting nicht montiert werden kann, wenn der Verschlussstopfen noch im Rohr sitzt.

Vorzugsweise sind die Bereiche, welche seitlich über den Hüllzylinder hervorstehen, leicht flexibel ausgebildet. Durch die flexible Ausbildung des Überstandes wird bei der Entbündelung eines Rohrbündels verhindert, dass der Verschlusstopfen aus dem Rohr herausgezogen wird.

Durch die möglichst grosse Ausbildung des Aussendurchmessers des Bogens ergeht der Vorteil, dass dem Installateur ein Laschenelement bereitgestellt wird, welches gut ergriffen werden kann.

Vorzugsweise weist der Verschlussstopfen eine Anschlagsfläche auf, mit welcher der Verschlussstopfen an einer Frontfläche des Rohrs anschlägt. Vorzugsweise ist die Anschlagsfläche als eine um die Mittelachse umlaufende Ringfläche ausgebildet.

Vorzugsweise weist der Frontabschnitt mindestens eine quer zur Mittelachse verlaufende Verstärkungsrippe auf. Die Verstärkungsrippe kann Teil der Stirnfläche sein oder die Stirnfläche bereitstellen. Mit der Verstärkungsrippe kann die Festigkeit des Verschlussstopfens erhöht werden. Dies insbesondere gegen Kräfte, die den Verschlussstopfen in das Rohr eindrücken könnten.

Vorzugsweise erstreckt sich die mindestens eine Verstärkungsrippe von der Mittelachse her gesehen in den Bereich der Anschlagsfläche hinein. Vorzugsweise liegt die mindestens eine Verstärkungsrippe unterhalb des Laschenelements. Vorzugsweise liegt das Laschenelement an den Verstärkungsrippen an. Diese Merkmale erhöhen die Festigkeit des Verschlussstopfens weiter.

Die Ausdrucksweise "anliegen" ist so zu verstehen, dass das Laschenelement an der Verstärkungsrippe vorzugsweise lose anliegt.

Vorzugsweise weist der Verschlussstopfen weiterhin eine Markierungslehre auf, mit welcher eine Markierung, insbesondere für die Einstecktiefe eines Fittings, an der Rohraussenseite anbringbar ist. Durch die Anordnung einer Markierungslehre am Verschlussstopfen wird dem Installateur ein sehr einfach zu bedienendes Element an die Hand gegeben. Nach Entfernen des Verschlussstopfens kann der Installateur den herausgezogenen Verschlussstopfen direkt für das Anzeichnen der Markierung einsetzen. Dadurch wird die Arbeit des Installateurs vereinfacht, weil der Installateur auf eine feste Markierungslehre zurückgreifen kann. Weiter wird der Schritt des Anzeichnens sicherer.

Sofern mit der Markierungslehre die Einstecktiefe für einen Fitting angezeichnet wird, ergeht zudem der Vorteil, dass das falsche Anzeichnen von der Einstecktiefe vermieden werden kann, wodurch die Fittings insgesamt verbessert positioniert werden können, was die Fittingverbindung insgesamt verbessert und Fehlverbindungen aufgrund falscher Positionierung vermieden werden können.

Vorzugsweise weist die Markierungslehre eine Anzeichnungskante auf, wobei die Anzeichnungskante derart ausgebildet ist, dass eine Stiftspitze an der Anzeichnungskante positionierbar ist. Die Anzeichnungskante kann Teil einer Öffnung sein. Alternativ kann die Anzeichnungskante auch als freie Kante ausgebildet sein.

Vorzugsweise weist die Markierungslehre eine Anschlagsfläche auf, mit welcher die Markierungslehre an die Frontfläche des Rohrs anlegbar ist, wobei die Anschlagsfläche in einem Abstand beabstandet zur Anzeichnungskante liegt. Durch die Anschlagsfläche kann der Installateur den Verschlussstopfen für den Zweck des Anbringens der Markierung an einer determinierten Lage am Rohr positionieren.

Vorzugsweise steht von der Anschlagsfläche eine Führungsnocke ab, welche beim Vorgang der Markierung mit der Rohrinnenseite in Kontakt bringbar ist. Über die Führungsnocke wird der Verschlussstopfen am Rohr geführt und der Verschlussstopfen kann einfach um das Rohr herum bewegt werden.

Vorzugsweise weist die Markierungslehre eine Führungsfläche auf, mit welcher die Markierungslehre an der Rohraussenseite anlegbar ist. Die Führungsfläche ist vorzugweise konkav gerundet. Der Radius der konkaven Rundung entspricht vorzugsweise im Wesentlichen dem Radius der Rohraussenseite.

Vorzugsweise ist die Markierungslehre im Bereich des Frontabschnitts angeordnet. Diese Variante hat den Vorteil, dass der zusätzliche Materialbedarf für die Markierungslehre sehr gering gehalten werden kann.

Alternativerweise kann sich die Markierungslehre auch dem Stopfenabschnitt anschliessen, wobei die Markierungslehre in das Rohr hineinragt, wenn der Verschlussstopfen ins Rohr eingesetzt ist. Dies Variante hat den Vorteil, dass die Markierungslehre vor dem Anzeichnen durch das Rohr vor äusseren Einflüssen geschützt ist.

Eine Anordnung umfasst ein Rohr und einen Verschlussstopfen nach obiger Beschreibung, wobei wenn der Verschlussstopfen mit dem Rohr in Verbindung steht, der Stopfenabschnitt in das Rohr einragt und der Frontabschnitt mit dem Laschenelement im Wesentlichen innerhalb oder nur in einem geringen Masse ausserhalb eines geometrischen Hüllzylinders liegt, der durch den Aussendurchmesser des Rohrs definiert ist. Dadurch, dass der Frontabschnitt im besagten Hüllzylinder ist, ergeht der Vorteil, dass der Verschlussstopfen bei einer Relativverschiebung eines Rohrs in einem Rohrbündel nicht aus dem Rohr hinaus gedrückt werden kann.

Die Ausdrucksweise in einem geringen Mass ausserhalb ist so zu verstehen, dass sich der Frontabschnitt nur über wenige Millimeter, beispielsweise über maximal 1 bis 10 Millimetern über den Hüllzylinder radial nach aussen erstreckt.

Zudem ergeht der Vorteil, dass die Angriffsfläche für ein mögliches Einhaken massiv kleiner wird, wodurch der Verschlussstopfen insgesamt sicherer im Rohr gelagert wird.

In einer Alternative stehen Teile des Laschenelements über einen geometrischen Hüllzylinders seitlich hervor, derart, dass ein Fitting bei eingesetztem Stopfen nicht aufsetzbar ist.

Das Laschenelement ist derart am Verschlussstopfen angeordnet, dass wenn der Verschlussstopfen mit dem Rohr in Verbindung steht, das Laschenelement von aussen her frei zugänglich ist.

Vorzugsweise liegt das mindestens eine Rückhalteelement an der Rohrinnenseite an, wobei das Rückhalteelement beim Einsetzen des Stopfenabschnitts in das Rohr derart deformiert werden, dass der Stopfenabschnitt kraftschlüssig im Rohr gehalten wird.

Vorzugsweise stellt das mindestens eine Rückhalteelement eine Haltekraft gegen die Auszugsrichtung bereit, wobei das Laschenelement derart dimensioniert ist, dass dieses eine Kraft, die mindestens der Haltekraft entspricht, ohne Versagen aushält.

Hierdurch wird sichergestellt, dass das Verschlussstopfen in jedem Fall über das Laschenelement aus dem Rohr hinausgezogen werden kann, weil ein mechanisches Brechen oder gar an Abreissen des Laschenelementes vermieden werden kann.

Gemäss einem Verfahren zum Anbringen einer Markierung auf der Rohraussenseite eines Rohrs mit einem Verschlussstopfen nach obiger Beschreibung, wird in einem ersten Schritt der Verschlussstopfen aus dem Rohr herausgezogen, wobei in einem nachfolgenden Schritt der Verschlussstopfen mit der Markierungslehre am Rohr positioniert wird, und wobei in einem nachfolgenden Schritt eine Markierung basierend auf der Markierungslehre angebracht wird.

Für die Markierung wird beispielsweise ein Markierstift eingesetzt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Verschlussstopfens nach einer Ausführungsform der vorliegenden Erfindung in einem vom zu verschliessenden Rohr getrennten Zustand;
- Fig. 2: der Verschlussstopfen nach Figur 1, wobei sich ein Laschenelement in der Ausgangslage befindet;
- Fig. 3: der Verschlussstopfen nach Figur 1 und 2, wobei sich das Laschenelement in der Betätigungslage befindet;
- Fig. 4: eine Seitenansicht des Verschlussstopfens nach den vorhergehenden Figuren, wobei der Verschlussstopfen nicht im Rohr eingesetzt ist;
- Fig. 5: die Seitenansicht nach Figur 4, wobei der Verschlussstopfen in das Rohr eingesetzt ist;
- Fig. 6: eine Seitenansicht der Figur 5;
- Fig. 7: eine weitere Ansicht des Verschlusstopfens nach den vorhergehenden Figuren in einem Rohr zusammen mit einem Rohrfitting;
- Fig. 8: eine perspektivische Ansicht des Verschlussstopfens nach einer der vorhergehenden Figuren mit einer Markierungslehre;
- Fig. 9: eine weitere perspektivische Ansicht der Figur 8, wobei der Verschlussstopfen am Rohr zum Anbringen einer Markierung mit der Markierungslehre angebracht ist;
- Fig. 10: eine weitere perspektivische Ansicht der Figur 8, wobei der Verschlussstopfen am Rohr zum Anbringen einer Markierung mit der Markierungslehre angebracht ist;
- Fig. 11: eine weitere Ausführungsform des Verschlussstopfens mit einer Weiterbildung des Laschenelements;
- Fig. 12: eine weitere Ausführungsform des Verschlussstopfens mit einer Weiterbildung der Markierungslehre;
- Fig. 13: eine weitere Ausführungsform des Verschlussstopfens mit einer Weiterbildung der Markierungslehre; und
- Fig. 14: eine weitere Ausführungsform des Verschlussstopfens mit einer Weiterbildung der Markierungslehre.

### BESCHREIBUNG BEVORZUGTER AUSFÜHRUNGSFORMEN

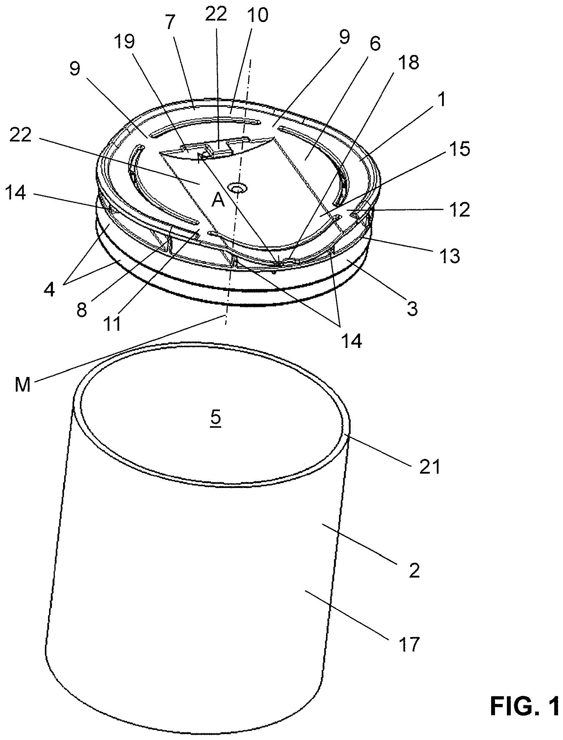

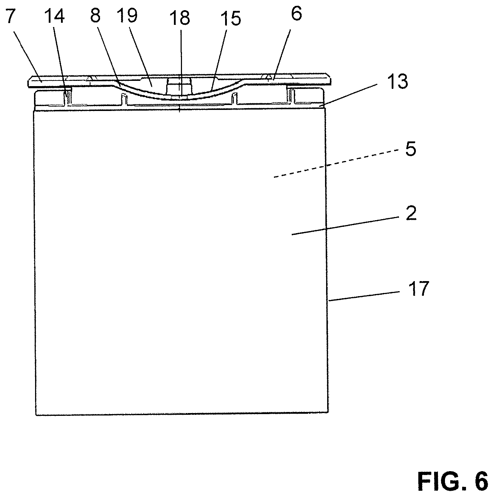

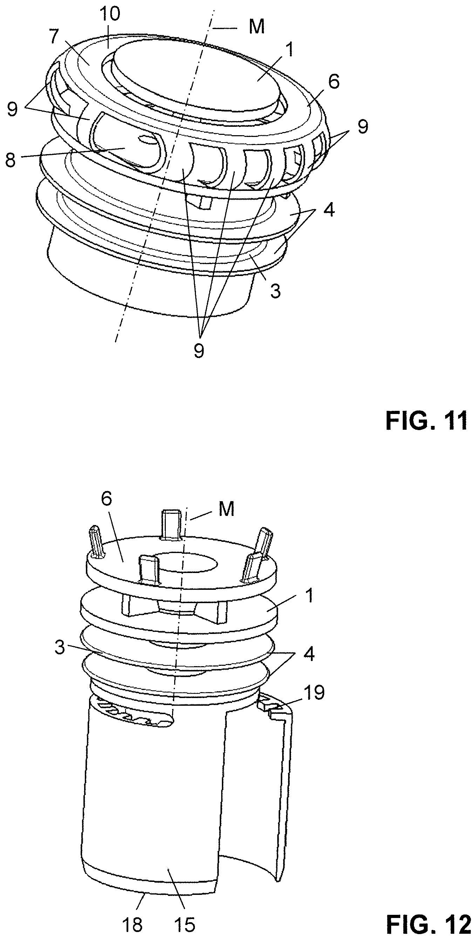

In den Fig. 1 bis 10 werden verschiedene Ansichten einer Ausführungsform eines Verschlussstopfens 1 gezeigt. Die Fig. 11 bis 14 zeigen weitere Ausführungsformen des Verschlussstopfens 1. Allen Einführungsformen ist gemeinsam, dass der Verschlussstopfens 1 zum Verschliessen eines Rohrs 2 dient. Dabei wird der Verschlussstopfen 1 in das Rohr 2 eingesetzt und der Rohrinnenraum des Rohrs 2 wird durch den Verschlussstopfen 1 dicht verschlossen.

Der Verschlussstopfen 1 umfasst in allen Ausführungsformen einen sich über eine Mittelachse M herumerstreckenden Stopfenabschnitt 3 mit mindestens einem Rückhalteelement 4. Der Stopfenabschnitt 3 ragt im mit dem Rohr 2 verbundenen Zustand in das Rohr 2 ein. Mit dem mindestens einen Rückhalteelement 4 wird eine kraftschlüssige Verbindung zwischen Verschlussstopfen 1 und der Rohrinnenseite bereitgestellt. Der Verschlussstopfen 1 wird über diese kraftschlüssige Verbindung zum Rohr 2 entsprechend gesichert, kann nicht aus dem Rohr 2 herausfallen, sondern nur bei entsprechender Kraftanwendung aus dem Rohr 2 herausgezogen werden.

Der Verschlussstopfen 1 gemäss der vorliegenden Erfindung kann gemäss den unten genannten Weiterbildungen verschiedene weitere Elemente aufweisen. Gemäss einer ersten Weiterbildung umfasst der Verschlussstopfen ein Laschenelement und eine Markierungslehre. Gemäss einer zweiten Weiterbildung umfasst der Verschlussstopfen das Laschenelement, nicht aber die Markierungslehre. In der Folge werden nun verschiedene Ausführungsformen mit dem Laschenelement und der Markierungslehre gemäss der ersten Weiterbildung genauer erläutert. Die Erläuterung beziehen sich aber auch auf die zweite Weiterbildung.

In der Folge wird nun das Laschenelement 7 detailliert beschrieben. Das Laschenelement 7 ist Teil eines Frontabschnitts 6. Das Laschenelement 7 ist, wenn der Verschlussstopfen 1 in das Rohr 2 eingesetzt ist, frei zugänglich. Das Laschenelement 7 ist dabei derart zugänglich, dass das Laschenelement 7 durch einen Installateur ergreifbar ist und dass der Verschlussstopfen 1 mit dem Laschenelement 7 aus dem Rohr 2 herausziehbar ist. Über das Laschenelement 7 wird eine Auszugskraft auf den Verschlussstopfen 1 aufgebracht.

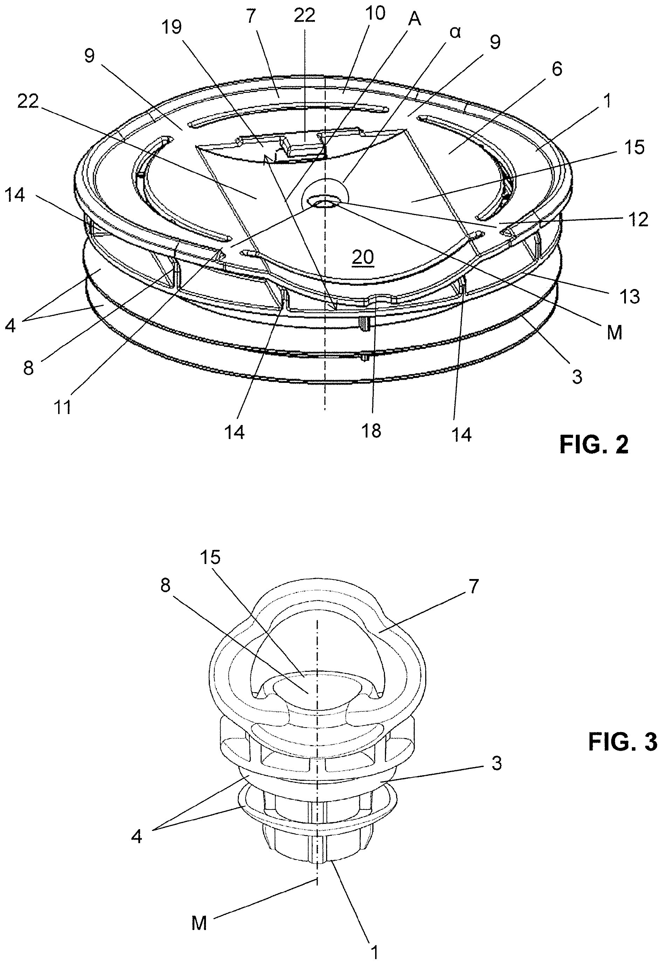

In der Fig. 2 wird der Verschlussstopfen 1 in einer perspektivischen Ansicht gezeigt. Das Laschenelement 7 liegt dabei in der Ausgangslage. In der Ausgangslage liegt das Laschenelement 7 an einer Stirnfläche 8 des Frontabschnitts 6 an. Von der Ausgangslage kann das Laschenelement 7 durch den Installateur in die Betätigungslage gebracht werden. In der Fig. 3 wird das Laschenelement 7 in der Betätigungslage gezeigt. In der Betätigungslage kann das Laschenelement 7 durch den Installateur gut ergriffen werden und der Verschlussstopfen 1 kann aus dem Rohr 2 herausgezogen werden. In der Betätigungslage ragt das Laschenelement 7 von der Stirnfläche 8 weg. Das Laschenelement 7 ist, mit anderen Worten gesagt, von der Ausgangslage in die Betätigungslage von der Stirnfläche 8 wegbiegbar.

Anhand der Fig. 2 werden nun weitere Detailmerkmale des Laschenelements 7 genauer erläutert. Das Laschenelement 7 steht über mindestens eine mit einer Sollbruchstelle ausgebildeten Verbindung 9 mit dem Frontabschnitt 8 in Verbindung. In der gezeigten Ausführungsform sind zwei Verbindungen 9 angeordnet. Die Sollbruchstelle der Verbindung 9 ist vor dem Herausziehen des Verschlussstopfen 1 durch den Installateur auftrennbar. Bei aufgetrennter Sollbruchstelle kann das Laschenelement 7 dann von der Ausgangslage, in der Fig. 2 gezeigt, in die Betätigungslage, in der Fig. 3 gezeigt, vom Frontabschnitt 6 weggebogen werden.

Das Laschenelement 7 ist als Bogen 10 ausgebildet. Der Bogen 10 erstreckt sich um einen Bogenwinkel α um die Mittelachse M von einem ersten Bogenende 11 zu einem zweiten Bogenende 12. Die genannten Bogenenden 11, 12 sind fest am Frontabschnitt angeformt. Über diese Anformung wird die Kraft vom Laschenelement 7 auf dem Verschlussstopfen 2 beim Vorgang des Herausziehens übertragen. Der Bogen 10 ist als Ganzes vom Frontabschnitt 6 wegbiegbar.

Die mindestens eine Verbindung 9 mit der Sollbruchstelle liegt am Bogen 10 des Laschenelements 7 zwischen den beiden Bogenenden 11, 12. Hier liegen die Verbindungen 9 in gleichmässigen Abständen zueinander zwischen den Bogenenden 11, 12.

Der Bogenwinkel α des Bogens 10 zwischen den beiden genannten Bogenenden 11, 12 weist einen Winkel im Bereich von 240 Grad bis 330 Grad auf. Je grösser der Winkel, desto grösser ist die Lasche und desto einfacher wird dem Installateur das Ergreifen der Lasche gemacht.

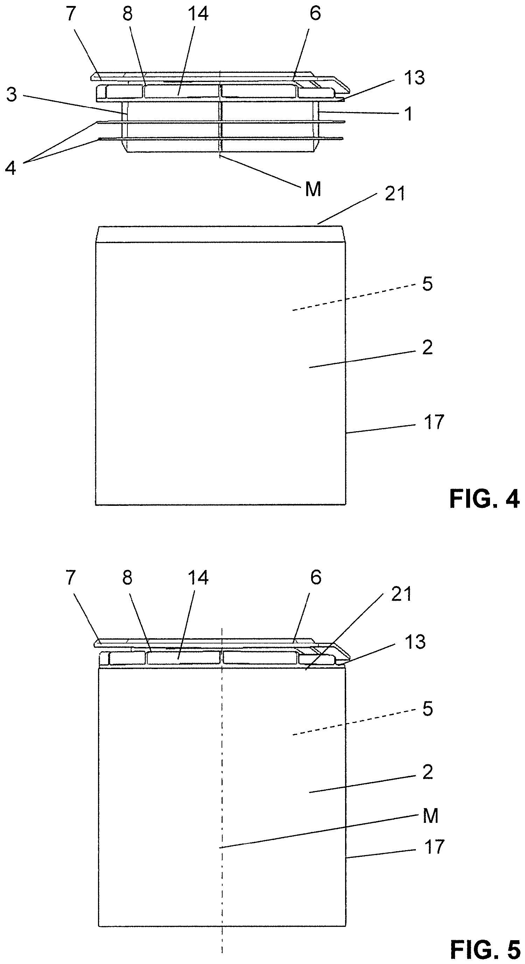

Die Fig. 4, 5 und 6 zeigen Ansichten rechtwinklig auf die Mittelachse M des Rohrs 2. Der Aussendurchmesser D10 des Bogens 10 ist möglichst gross gewählt. Der Aussendurchmesser D10 des Bogens 10 ist aber so gewählt, dass das Laschenelement 2 vollständig innerhalb eines geometrischen Hüllzylinders liegt, der durch den Aussendurchmesser des Rohrs 2 definiert wird bzw. dass das Laschenelement 2 nur unwesentlich aus dem geometrischen Hüllzylinders herausragt. Mit anderen Worten definiert ist der Aussendurchmesser des Bogens 10 nicht grösser als der Aussendurchmesser D4 des mindestens einen Rückhalteelementes 4 oder der Aussendurchmesser D10 ist nicht grösser als 1,1 Mal der Aussendurchmesser D4 des mindestens einen Rückhalteelements 4. Mathematisch ausgedrückt: D10=1.1xD4. Mit anderen Worten gesagt, ist der Verschlussstopfen 1 mit dem Frontabschnitt 6 derart ausgebildet, dass dieser nicht oder nur unwesentlich radial über den maximalen Aussendurchmesser des Rohrs 2 hervorragt.

Der Verschlussstopfen weist weiterhin eine Anschlagsfläche 13 auf, mit welcher der Verschlussstopfen 1 an der Frontfläche 21 des Rohrs 2 anschlägt. Die Anschlagsfläche 13 des Verschlussstopfens 1 ist eine Ringfläche, die um die Mittelachse M umläuft. Die Anschlagsfläche 13 ist dabei Teil des Frontabschnitts 6.

Weiter weist der Frontabschnitt 6 mindestens eine quer zur Mittelachse M verlaufende Verstärkungsrippe 14 auf. In der gezeigten Ausführungsform sind im Frontabschnitt 6 mehrere quer zur Mittelachse M und parallel zueinander verlaufende Verstärkungsrippe 14 angeordnet. Die Verstärkungsrippe 14 erstrecken sich dabei von der Mittelachse M her gesehen bis in den Bereich der Anschlagsfläche 13 hinein. Weiter sind die Verstärkungsrippen 14 in der gezeigten Ausführungsform unterhalb des Laschenelements 7 angeordnet. Das Laschenelement 7 liegt in der Ausgangslage an der mindestens eine Verstärkungsrippe 14 an.

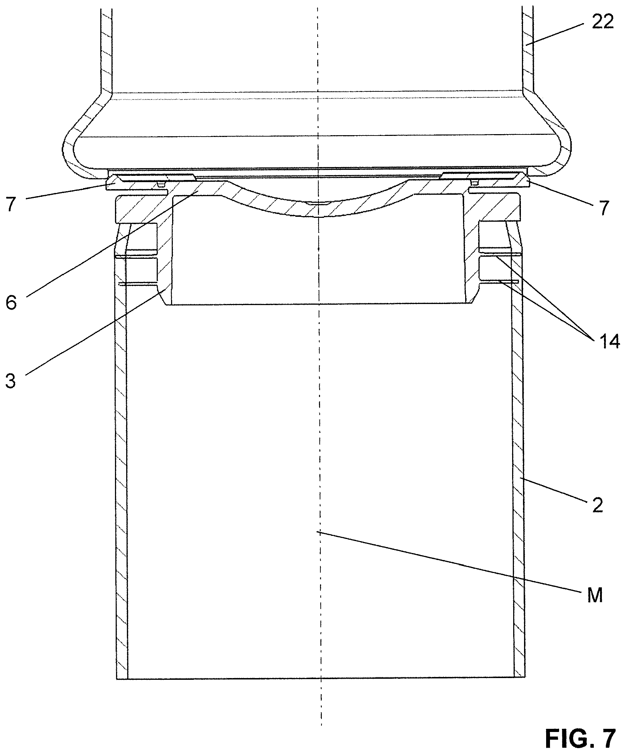

In der Fig 7 wird eine Variante gezeigt, bei welcher das Laschenelement 7 einen leicht grösseren Durchmesser als der Aussendurchmesser des Rohrs 2 aufweist. Hierdurch wird verhindert, dass ein Fitting 23 bei eingesetztem Verschlussstopfen auf des Rohr 2 aufgesetzt werden kann.

In der Fig. 11 wird eine weitere Ausführungsform des Laschenelements 7gezeigt. Hier erstreckt sich die Aufreisslasche als Bogen um 360 Grad um die Mittelachse M herum. Die Verbindung 9 mit der Sollbruchstelle ist hier ebenfalls am Bogen angeformt und erstreckt sich im Wesentlichen in Richtung der Mittelachse M.

In der Folge wird nun die Markierungslehre 15 detailliert beschrieben. In den Fig. 1 bis 10 wird eine erste Ausführungsform der Markierungslehre 15 gezeigt. Der Verschlussstopfen 1 weist demgemäss eine Markierungslehre 15 auf, mit welcher eine Markierung 16 an der Rohraussenseite 17 anbringbar ist. Die Markierung 16 dient insbesondere für die Markierung einer Einstecktiefe eines Fittings. Dem Installateur wird durch die Markierung 16 angezeigt, wie weit er das Rohr in ein Fitting einzuschieben hat, sodass die Verpressung zwischen Fitting und Rohr optimal ist.

Die Markierungslehre 15 weist in der gezeigten Ausführungsform Anzeichnungskante 18, hier in der Form einer Anzeichnungsöffnung 18 auf, die Anzeichnungsöffnung 18 ist dabei derart ausgebildet, dass eine Stiftspitze eines Anzeichnungsstiftes in der Anzeichnungsöffnung 18 positionierbar ist. Weiter weist die Markierungslehre 15 eine Anschlagsfläche 19 auf, mit welcher die Markierungslehre 15 an die Frontfläche 21 des Rohrs 2 anlegbar ist. Die Anschlagsfläche 19 liegt in einem Abstand A beanstandet zur Anzeichnungsöffnung 18.

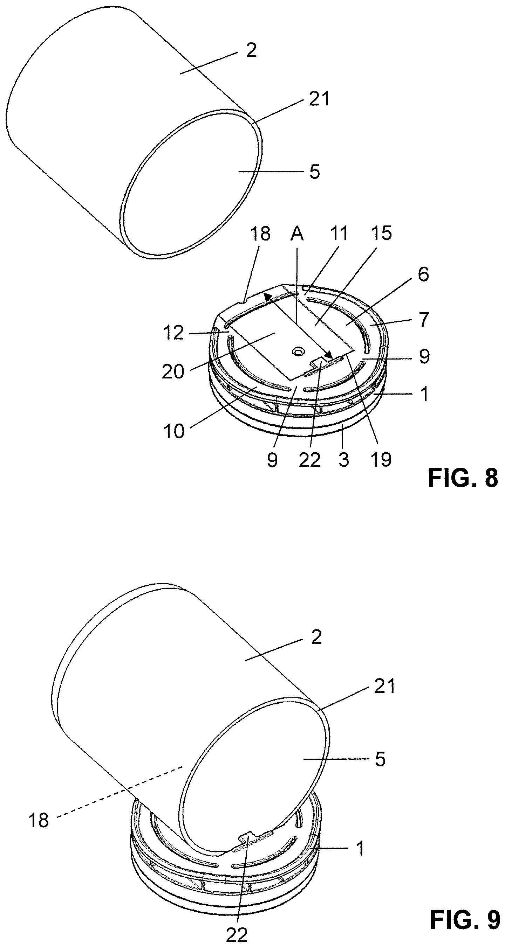

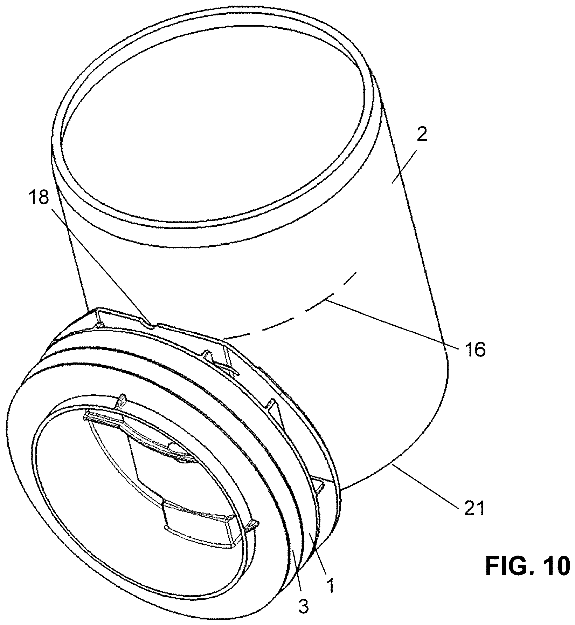

In der Fig. 8 wird der Verschlussstopfen 1 kurz vor dem Aufsetzten auf das Rohr 2 für den Vorgang des Anzeichnens getrennt vom Rohr 2 dargestellt. In der Fig. 9 und in der Fig. 10 liegt der Verschlussstopfen 1 in der Position, in welcher das Anzeichnen der Markierung möglich ist. Die Anzeichnungsöffnung 18 liegt hier an der Rohraussenseite 17 und ein Stift kann entsprechend in die Anzeichnungsöffnung 18 positioniert werden. Anschliessend kann der Verschlussstopfen 1 mindestens teilweise um die Mittelachse des Rohrs herumgeführt werden, wobei die Anschlagsfläche 19 in steten Kontakt mit der Frontfläche 21 des Rohrs bleiben soll. Hierdurch kann eine Markierung 16, wie in der Fig. 10 gezeigt, an die Rohraussenseite 17 angebracht werden.

In der gezeigten Ausführungsform erstreckt sich von der Anschlagsfläche 19 eine Führungsnocke 22 ab. Die Führungsnocke 22 ist beim Vorgang des Anbringens der Markierung mit der Rohrinnenseite 5 in Kontakt bringbar. Dies wird in der Fig. 9 gezeigt. Die Führungsnocke 22 ragt dabei in den Innenraum des Rohrs 2 ein. Mit der Führungsnocke 22 kann sichergestellt werden, dass der Verschlussstopfen 1 beim Vorgang der Markierung nicht von der Frontfläche 21 des Rohrs 2 abrutschen kann.

Weiter weist die Markierungslehre 15 eine Führungsfläche 20 auf, mit welcher die Markierungslehre 15 an der Rohraussenseite 17 anlegbar ist. Die Führungsfläche 20 ist in der gezeigten Ausführungsform konkav gerundet ausgebildet und weist vorzugsweise einen Radius auf, welche dem Radius des zu markierenden Rohrs entspricht. Mit anderen Worten gesagt, ist der Radius der konkaven Führungsfläche 20 im Wesentlichen gleich mit dem Radius der Rückhalteelemente 4 oder leicht grösser als der Radius der Rückhalteelemente 4.

In der gezeigten Ausführungsform gemäss den Figuren 1 bis 10 ist die Markierungslehre im Bereich der Frontfläche 13 angeordnet. In den Ausführungsformen nach den Figuren 12 bis 14 werden weitere Varianten des Markierungslehre 15 gezeigt. Diesen Ausführungsformen ist gemeinsam, dass die Markierungslehre 15 sich dem Stopfenabschnitt 3 anschliesst oder Teil des Stopfenabschnittes 3 ist.

Gemäss der Fig. 12 ist die Markierungslehre 15 als flexible Wand ausgebildet. Die flexible Wand umfasst dabei eine Anschlagsfläche 19, welche radial nach innen steht. Die Anzeichnungskante 18 wird durch die Endkante dieser flexiblen Wand bereitgestellt. Frontseitig weist der Verschlusstopfen hier Anschlagsstege auf, welche bei eingesetztem Verschlussstopfen ein aufsetzen eines Fittings verhindert.

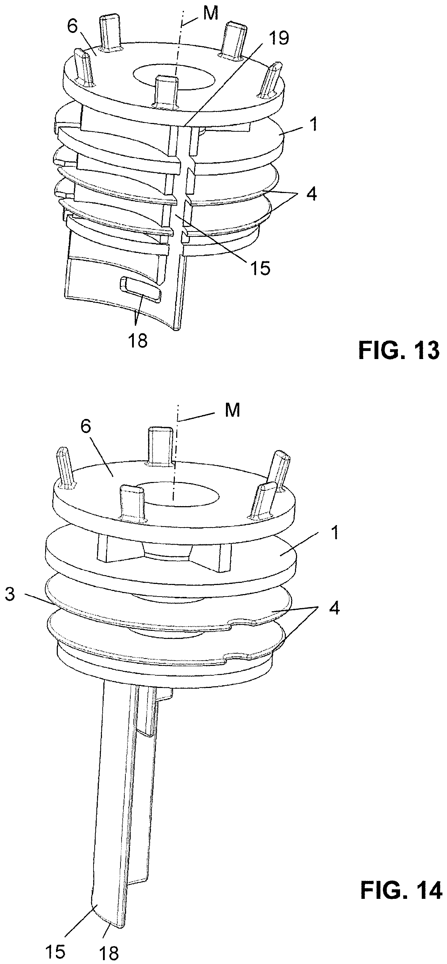

In der Fig. 13 erstreckt sich die Markierungslehre in den Stopfenabschnitt 3 hinein. Die Markierungslehre 15 ist Teil des Stopfenabschnitts 3. Hier weist die Markierungslehre die Gestalt eines konkav gerundeten Schlitzes auf, welche die Wand entsprechend aufnimmt.

In der Fig. 14 wird eine weitere Ausführungsform der Markierungslehre 15 gezeigt. Hier erstreckt sich die Markierungslehre 15 als Führungswand vom Stopfenabschnitt 3 weg.

**BEZUGSZEICHENLISTE**

| | | | |
|---|---|---|---|
| 1 | Verschlussstopfen | 16 | Markierung |
| 2 | Rohr | 17 | Rohraussenseite |
| 3 | Stopfenabschnitt | 18 | Anzeichnungskante |
| 4 | Rückhalteelement | 19 | Anschlagsfläche |
| 5 | Rohrinnenseite | 20 | Führungsfläche |
| 6 | Frontabschnitt | 21 | Frontfläche |
| 7 | Laschenelement | 22 | Führungsnocke |
| 8 | Stirnfläche | 23 | Fitting |
| 9 | Verbindung mit Sollbruchstelle | α | Bogenwinkel |
| 10 | Bogen | A | Abstand |
| 11 | erstes Bogenende | M | Mittelachse |
| 12 | zweites Bogenende | | |
| 13 | Anschlagsfläche | | |
| 14 | Verstärkungsrippe | | |
| 15 | Markierungslehre | | |

## Patentansprüche

1. Verschlussstopfen (1) zum Verschliessen eines Rohrs (2) umfassend
einen sich um eine Mittelachse (M) herumerstreckenden Stopfenabschnitt (3) mit mindestens einem Rückhalteelement (4), welcher Stopfenabschnitt (3) im mit dem Rohr (2) verbundenen Zustand in das Rohr (2) einragt, wobei mit dem mindestens einen Rückhalteelement (4) eine kraftschlüssige Verbindung zwischen Verschlussstopfen (1) und der Rohrinnenseite (5) bereitstellbar ist, und
einen Frontabschnitt (6) mit einem Laschenelement (7), wobei das Laschenelement (7) im mit dem Rohr (2) verbundenen Zustand frei zugänglich ist, derart, dass das Laschenelement (7) durch einen Installateur ergreifbar ist und dass der Verschlussstopfen (1) mit dem Laschenelement (7) aus dem Rohr (2) herausziehbar ist, wobei
das Laschenelement (7) als Bogen (10) ausgebildet ist, der sich vorzugsweise um einen Bogenwinkel (α) um die Mittelachse (M) von einem ersten Bogenende (11) zu einem zweiten Bogenende (12) erstreckt, wobei die genannten Bogenenden (11, 12) fest am Frontabschnitt (6) angeformt sind und wobei der Bogen (10) vom Frontabschnitt (6) wegbiegbar ist, **dadurch gekennzeichnet,**
**dass** der Aussendurchmesser (D10) des Bogens (10) möglichst gross gewählt ist, wobei der Aussendurchmesser (D10) aber nicht grösser als der Aussendurchmesser (D4) des mindestens einen Rückhalteelements (4) ist; oder dass der Aussendurchmesser (D10) aber nicht grösser ist, als 1,1 Mal der Aussendurchmesser (D4) des mindestens einen Rückhalteelements (4).

2. Verschlussstopfen (1) nach Anspruch 1, **dadurch gekennzeichnet, dass** das Laschenelement (7) von einer Ausgangslage, in welcher das Laschenelement (7) an einer Stirnfläche (8) des Frontabschnitts (6) anliegt, in eine Betätigungslage, in welcher das Laschenelement (7) von der Stirnfläche (8) wegragt, wegbiegbar ist.

3. Verschlussstopfen (1) nach Anspruch 1 oder 2, **dadurch gekennzeichnet, dass** das Laschenelement (7) über mindestens einen mit einer Sollbruchstelle ausgebildeten Verbindung (9) mit dem Frontabschnitt (8) verbunden ist, wobei die Sollbruchstelle (9) vor dem Herausziehen des Verschlussstopfens (1) auftrennbar ist.

4. Verschlussstopfen (1) nach einem der vorhergehenden Ansprüche, **dadurch gekennzeichnet, dass** die mindestens eine Verbindung (9) mit der Sollbruchstelle am Bogen (10) des Laschenelements (7) zwischen den beiden Bogenenden (11, 12) liegt.

5. Verschlussstopfen (1) nach einem der vorhergehenden Ansprüche, **dadurch gekennzeichnet, dass** der Bogenwinkel (α) des Bogens (10) zwischen den beiden genannten Bogenenden (11, 12) einen Winkel im Bereich von 180° bis 360°, insbesondere in einem Winkel im Bereich von 240° bis 330°, aufweist.

6. Verschlussstopfen (1) nach einem der vorhergehenden Ansprüche, **dadurch gekennzeichnet, dass** der Verschlussstopfen (1) eine Anschlagsfläche (13) aufweist, mit welcher der Verschlussstopfen (1) an einer Frontfläche (21) des Rohrs (2) anschlägt, wobei die Anschlagsfläche (13) vorzugsweise als um die Mittelachse (M) umlaufende Ringfläche ausgebildet ist.

7. Verschlussstopfen (1) nach einem der vorhergehenden Ansprüche, **dadurch gekennzeichnet, dass** der Frontabschnitt (6) mindestens eine quer zur Mittelachse (M) verlaufende Verstärkungsrippe (14) aufweist.

8. Verschlussstopfen (1) nach einem der vorhergehenden Ansprüche 6 und 7, **dadurch gekennzeichnet, dass** sich die mindestens eine Verstärkungsrippe (14) von der Mittelachse (M) her gesehen in den Bereich der Anschlagsfläche (13) hinein erstreckt, und/oder dass die mindestens eine Verstärkungsrippe (14) unterhalb des Laschenelements (7) liegt und/oder dass das Laschenelement (7) an der mindestens einen Verstärkungsrippe (14) anliegt.

9. Verschlussstopfen (1) nach einem der vorhergehenden Ansprüche, **dadurch gekennzeichnet, dass** der Verschlussstopfen (1) weiterhin eine Markierungslehre (15) aufweist, mit welcher eine Markierung (16), insbesondere für die Einstecktiefe eines Fittings, an der Rohraussenseite (17) anbringbar ist.

10. Verschlussstopfen (1) nach Anspruch 9, **dadurch gekennzeichnet, dass** die Markierungslehre (15) eine Anzeichnungskante (18) aufweist, wobei die Anzeichnungskante (18) derart ausgebildet ist, dass eine Stiftspitze an der Anzeichnungskante (18) positionierbar ist.

11. Verschlussstopfen (1) nach Anspruch 10, **dadurch gekennzeichnet, dass** die Markierungslehre (15) eine Anschlagsfläche (19) aufweist, mit welcher die Markierungslehre (15) an die Frontfläche (21) des Rohrs (2) anlegbar ist, wobei die Anschlagsfläche (19) in einem Abstand (A) beabstandet zur Anzeichnungskante (18) liegt.

12. Verschlussstopfen (1) nach Anspruch 11, **dadurch gekennzeichnet, dass** von der Anschlagsfläche (19) eine Führungsnocke (22) absteht, welche beim Vorgang der Markierung mit der Rohrinnenseite (5) in Kontakt bringbar ist.

13. Verschlussstopfen (1) nach einem der Ansprüche 9 bis 12, **dadurch gekennzeichnet, dass** die Markierungslehre (15) eine Führungsfläche (20) aufweist, mit welcher die Markierungslehre (15) an der Rohraussenseite (17) anlegbar ist, wobei die Führungsfläche (20) vorzugsweise konkav gerundet ist.

14. Verschlussstopfen nach einem der vorhergehenden Ansprüche 9 bis 13, **dadurch gekennzeichnet, dass** die Markierungslehre (15) im Bereich des Frontabschnitts (6) angeordnet ist; oder dass die Markierungslehre (15) sich dem Stopfenabschnitt (3) anschliesst; oder dass die Markierungslehre (15) Teil des Stopfenabschnittes (3).

15. Anordnung umfassend ein Rohr und einen Verschlussstopfen nach einem der vorhergehenden Ansprüche, **dadurch gekennzeichnet, dass** wenn der Verschlussstopfen mit dem Rohr in Verbindung steht, der Stopfenabschnitt in das Rohr einragt und der Frontabschnitt mit dem Laschenelement im Wesentlichen innerhalb oder nur in einem geringen Masse ausserhalb eines geometrischen Hüllzylinders liegt, der durch den Aussendurchmesser des Rohrs definiert ist; oder dass wenn der Verschlussstopfen mit dem Rohr in Verbindung steht, der Stopfenabschnitt in das Rohr einragt und Teile des Laschenelements über einen geometrischen Hüllzylinders seitlich hervorstehen, derart, dass ein Fitting bei eingesetztem Stopfen nicht aufsetzbar ist.

16. Anordnung nach Anspruch 15, **dadurch gekennzeichnet, dass** das mindestens eine Rückhalteelement (4) an der Rohrinnenseite (5) anliegt, wobei das Rückhalteelement (4) beim Einsetzen des Stopfenabschnitts in das Rohr (2) derart deformiert werden, dass der Stopfenabschnitt (3) kraftschlüssig im Rohr (2) gehalten wird.

17. Anordnung nach Anspruch 16, **dadurch gekennzeichnet, dass** das mindestens eine Rückhalteelement (4) eine Haltekraft gegen die Auszugsrichtung bereitgestellt wird, wobei das Laschenelement (7) derart dimensioniert ist, dass dieses eine Kraft, die mindestens der Haltekraft entspricht, ohne Versagen aushält.

18. Verfahren zum Anbringen einer Markierung auf der Rohraussenseite eines Rohrs mit einem Verschlussstopfen (1) nach einem der Ansprüche 9 bis 14, wobei in einem ersten Schritt der Verschlussstopfen (1) aus dem Rohr (2) herausgezogen wird, wobei in einem nachfolgenden Schritt der Verschlussstopfen (1) mit der Markierungslehre (15) am Rohr positioniert wird, und wobei in einem nachfolgenden Schritt eine Markierung basierend auf der Markierungslehre (15) angebracht wird.

## Claims

1. Sealing plug (1) for closing a pipe (2) comprising
a plug section (3) extending around a central axis (M) and having at least one retaining element (4), which plug section (3) projects into the pipe (2) in the state connected to the pipe (2), the at least one retaining element (4) being capable of providing a non-positive connection between the sealing plug (1) and the inside (5) of the pipe, and
a front section (6) with a tab element (7), the tab element (7) being freely accessible in the state connected to the pipe (2), in such a way that the tab element (7) can be gripped by an installer and that the sealing plug (1) with the tab element (7) can be pulled out of the pipe (2), wherein
the tab element (7) is designed as a bend (10) which preferably extends by a bend angle (α) about the central axis (M) from a first bend end (11) to a second bend end (12), the said bend ends (11, 12) being integrally formed on the front section (6) and it being possible for the bend (10) to be bent away from the front section (6), **characterized**
**in that** the outer diameter (D10) of the bend (10) is selected to be as large as possible, wherein the outer diameter (D10), however, not being larger than the outer diameter (D4) of the at least one retaining element (4); or in that the outer diameter (D10), however, is not larger than 1.1 times the outer diameter (D4) of the at least one retaining element (4).

2. Sealing plug (1) according to claim 1, **characterized in that** the tab element (7) can be bent away from an initial position, in which the tab element (7) rests against an end face (8) of the front section (6), into an actuation position, in which the tab element (7) projects away from the end face (8).

3. Sealing plug (1) according to claim 1 or 2, **characterized in that** the tab element (7) is connected to the front section (6) via at least one connection (9) formed with a predetermined breaking point, the predetermined breaking point (9) being separable before the sealing plug (1) is pulled out.

4. Sealing plug (1) according to one of the preceding claims, **characterized in that** the at least one connection (9) with the predetermined breaking point is located on the bend (10) of the tab element (7) between the two bend ends (11, 12).

5. Sealing plug (1) according to one of the preceding claims, **characterized in that** the bend angle (α) of the bend (10) between the two said bend ends (11, 12) has an angle in the range from 180° to 360°, in particular at an angle in the range from 240° to 330°.

6. Sealing plug (1) according to one of the preceding claims, **characterized in that** the sealing plug (1) has a stop surface (13) with which the sealing plug (1) stops against a front surface (21) of the pipe (2), the stop surface (13) preferably being designed as an annular surface running around the central axis (M).

7. Sealing plug (1) according to one of the preceding claims, **characterized in that** the front section (6) has at least one reinforcing rib (14) extending transversely to the central axis (M).

8. Sealing plug (1) according to one of the preceding claims 6 and 7, **characterized in that** the at least one reinforcing rib (14), viewed from the center axis (M), extends into the region of the stop face (13), and/or **in that** the at least one reinforcing rib (14) lies below the tab element (7) and/or **in that** the tab element (7) bears against the at least one reinforcing rib (14).

9. Sealing plug (1) according to one of the preceding claims, **characterized in that** the sealing plug (1) further has a marking gauge (15) with which a marking (16), in particular for the insertion depth of a fitting, can be applied to the tube outer side (17).

10. Sealing plug (1) according to claim 9, **characterized in that** the marking gauge (15) has a marking edge (18), the marking edge (18) being designed in such a way that a pin tip can be positioned on the marking edge (18).

11. Sealing plug (1) according to claim 10, **characterized in that** the marking gauge (15) has a stop surface (19) with which the marking gauge (15) can be placed against the front surface (21) of the pipe (2), the stop surface (19) lying at a distance (A) from the marking edge (18).

12. Sealing plug (1) according to claim 11, **characterized in that** a guide cam (22) projects from the stop surface (19) and can be brought into contact with the inner side (5) of the tube during the marking process.

13. Sealing plug (1) according to one of the claims 9 to 12, **characterized in that** the marking gauge (15) has a guide surface (20) with which the marking gauge (15) can be placed against the tube outer side (17), the guide surface (20) preferably being concavely rounded.

14. Sealing plug according to any of the preceding claims 9 to 13, **characterized in that** the marking gauge (15) is arranged in the region of the front section (6); or **in that** the marking gauge (15) adjoins the plug section (3); or **in that** the marking gauge (15) is part of the plug section (3).

15. An assembly comprising a tube and a sealing plug according to any one of the preceding claims, **characterized in that** when the sealing plug is connected with the tube, the plug section projects into the tube and the front section with the tab member lies substantially within or only to a small extent outside a geometrical envelope cylinder defined by the outer diameter of the tube; or **in that** when the plug is connected with the pipe, the plug section projects into the pipe and parts of the tab member project laterally beyond a geometric envelope cylinder such that a fitting cannot be fitted when the plug is inserted.

16. Assembly according to claim 15, **characterized in that** the at least one retaining element (4) rests against the inner side (5) of the pipe, the retaining element (4) being deformed when the plug section is inserted into the pipe (2) in such a way that the plug section (3) is held non-positively in the pipe (2).

17. Assembly according to claim 16, **characterized in that** the at least one retaining element (4) is provided with a retaining force against the pull-out direction, the tab element (7) being dimensioned such that the latter withstands a force corresponding at least to the retaining force without failure.

18. Method for applying a marking on the pipe outside of a pipe with a sealing plug (1) according to any of claims 9 to 14, wherein in a first step the sealing plug (1) is pulled out of the pipe (2), wherein in a subsequent step the sealing plug (1) is positioned on the pipe with the marking gauge (15), and wherein in a subsequent step a marking is applied based on the marking gauge (15).

## Revendications

1. Bouchon de fermeture (1) pour fermer un tuyau (2) comprenant
une section de bouchon (3) s'étendant autour d'un axe central (M) avec au moins un élément de retenue (4), laquelle section de bouchon (3) pénétrant dans le tuyau (2) à l'état relié au tuyau (2), une liaison par adhérence entre le bouchon de fermeture (1) et le côté intérieur du tuyau (5) pouvant être mise à disposition avec l'au moins un élément de retenue (4), et
une section avant (6) avec un élément de languette (7), l'élément de languette (7) étant librement accessible dans l'état relié au tuyau (2), de telle sorte que l'élément de languette (7) peut être saisi par un installateur et que le bouchon de fermeture (1) avec l'élément de languette (7) peut être retiré du tuyau (2),
l'élément de languette (7) étant réalisé sous la forme d'un arc (10) qui s'étend de préférence d'un angle d'arc (α) autour de l'axe médian (M) d'une première extrémité d'arc (11) à une deuxième extrémité d'arc (12), lesdites extrémités d'arc (11, 12) étant formées de manière fixe sur la section avant (6) et l'arc (10) pouvant être écarté par flexion de la section avant (6), **caractérisé en ce que**
le diamètre extérieur (D10) de l'arc (10) est choisi aussi grand que possible, le diamètre extérieur (D10) n'étant toutefois pas supérieur au diamètre extérieur (D4) de l'au moins un élément de retenue (4); ou **en ce que** le diamètre extérieur (D10) n'est toutefois pas supérieur à 1,1 fois le diamètre extérieur (D4) de l'au moins un élément de retenue (4).

2. Bouchon de fermeture (1) selon la revendication 1, **caractérisé en ce que** l'élément de languette (7) peut être plié d'une position initiale dans laquelle l'élément de languette (7) est en appui contre une surface frontale (8) de la section avant (6), à une position d'actionnement dans laquelle l'élément de languette (7) s'éloigne de la surface frontale (8).

3. Bouchon de fermeture (1) selon la revendication 1 ou 2, **caractérisé en ce que** l'élément de languette (7) est relié à la section avant (8) par au moins une liaison (9) ayant un point destiné à la rupture, le point destiné à la rupture (9) pouvant être séparé avant l'extraction du bouchon de fermeture (1).

4. Bouchon de fermeture (1) selon l'une des revendications précédentes, **caractérisé en ce que** l'au moins une liaison (9) avec le point destiné à la rupture sur l'arc (10) de l'élément de languette (7) se situe entre les deux extrémités d'arc (11, 12).

5. Bouchon de fermeture (1) selon l'une quelconque des revendications précédentes, **caractérisé en ce que** l'angle d'arc (α) de l'arc (10) entre lesdites deux extrémités d'arc (11, 12) présente un angle compris dans la plage de 180° à 360°, en particulier dans un angle compris dans la plage de 240° à 330°.

6. Bouchon de fermeture (1) selon l'une quelconque des revendications précédentes, **caractérisé en ce que** le bouchon de fermeture (1) présente une surface de butée (13) par laquelle le bouchon de fermeture (1) vient en butée contre une surface frontale (21) du tuyau (2), la surface de butée (13) étant de préférence réalisée sous la forme d'une surface annulaire s'étendant autour de l'axe central (M).

7. Bouchon de fermeture (1) selon l'une quelconque des revendications précédentes, **caractérisé en ce que** la section avant (6) présente au moins une nervure de renforcement (14) s'étendant transversalement à l'axe central (M).

8. Bouchon de fermeture (1) selon l'une des revendications précédentes 6 et 7, **caractérisé en ce que** l'au moins une nervure de renforcement (14) s'étend, vu depuis l'axe central (M), dans la zone de la surface de butée (13), et/ou **en ce que** l'au moins une nervure de renforcement (14) se trouve en dessous de l'élément de languette (7) et/ou **en ce que** l'élément de languette (7) est en appui contre l'au moins une nervure de renforcement (14).

9. Bouchon de fermeture (1) selon l'une quelconque des revendications précédentes, **caractérisé en ce que** le bouchon de fermeture (1) présente en outre un gabarit de marquage (15) avec lequel un marquage (16), en particulier pour la profondeur d'insertion d'un raccord, peut être appliqué sur le côté extérieur du tuyau (17).

10. Bouchon de fermeture (1) selon la revendication 9, **caractérisé en ce que** le gabarit de marquage (15) présente un bord de marquage (18), le bord de marquage (18) étant formé de telle sorte qu'une pointe de stylo peut être positionnée sur le bord de marquage (18).

11. Bouchon de fermeture (1) selon la revendication 10, **caractérisé en ce que** le gabarit de marquage (15) présente une surface de butée (19) par laquelle le gabarit de marquage (15) peut être appliqué contre la surface frontale (21) du tuyau (2), la surface de butée (19) étant située à une distance (A) espacée du bord de marquage (18).

12. Bouchon de fermeture (1) selon la revendication 11, **caractérisé en ce qu'**une languette de guidage (22) fait saillie de la surface de butée (19) et peut être amenée en contact avec le côté intérieur du tuyau (5) lors du processus de marquage.

13. Bouchon de fermeture (1) selon l'une des revendications 9 à 12, **caractérisé en ce que** le gabarit de marquage (15) présente une surface de guidage (20) avec laquelle le gabarit de marquage (15) peut être appliqué contre le côté extérieur du tuyau (17), la surface de guidage (20) étant de préférence arrondie de manière concave.

14. Bouchon de fermeture selon l'une des revendications 9 à 13, **caractérisé en ce que** le gabarit de marquage (15) est disposé au niveau de la section avant (6); ou **en ce que** le gabarit de marquage (15) se raccorde à la section de bouchon (3); ou **en ce que** le gabarit de marquage (15) fait partie de la section de bouchon (3).

15. Agencement comprenant un tuyau et un bouchon de fermeture selon l'une des revendications précédentes, **caractérisé en ce que**, lorsque le bouchon de fermeture est en liaison avec le tuyau, la section de bouchon fait saillie dans le tuyau et la section avant avec l'élément de languette se trouve essentiellement à l'intérieur ou seulement dans une faible mesure à l'extérieur d'un cylindre d'enveloppe géométrique défini par le diamètre extérieur du tuyau; ou **en ce que**, lorsque le bouchon de fermeture est en liaison avec le tuyau, la section de bouchon fait saillie dans le tuyau et des parties de l'élément de languette dépassent latéralement d'un cylindre enveloppant géométrique, de telle sorte qu'un raccord ne peut pas être mis en place lorsque le bouchon est inséré.

16. Agencement selon la revendication 15, **caractérisé en ce que** l'au moins un élément de retenue (4) s'applique contre la face intérieure (5) du tuyau, l'élément de retenue (4) étant déformé lors de l'insertion de la section de bouchon dans le tuyau (2) de telle sorte que la section de bouchon (3) est maintenue par adhérence dans le tuyau (2).

17. Agencement selon la revendication 16, **caractérisé en ce que** l'au moins un élément de retenue (4) fournit une force de retenue contre la direction d'extraction, l'élément de languette (7) étant dimensionné de telle sorte qu'il peut supporter une force au moins égale à la force de retenue sans défaillance.

18. Procédé pour appliquer un marquage sur l'extérieur d'un tuyau avec un bouchon de fermeture (1) selon l'une des revendications 9 à 14, dans lequel, dans une première étape, le bouchon de fermeture (1) est retiré du tuyau (2), dans lequel, dans une étape suivante, le bouchon de fermeture (1) est positionné sur le tuyau avec le gabarit de marquage (15), et dans lequel, dans une étape suivante, un marquage se basant sur le gabarit de marquage (15) est appliqué.
